# EUROPÄISCHE PATENTSCHRIFT

(11) **EP 1 382 514 B1**
(45) Veröffentlichungstag und Bekanntmachung des Hinweises auf die Patenterteilung: **05.10.2005**
(21) Anmeldenummer: 03014480.2
(22) Anmeldetag: 02.07.2003
(51) Int. Cl.: B62D 25/20

(54) **Bodenstruktur an Kraftfahrzeugen**
Motor vehicle floor structure
Structure de plancher pour véhicule automobile

(30) Priorität: 19.07.2002 DE 10232840
(43) Veröffentlichungstag der Anmeldung: 21.01.2004
(73) Patentinhaber: Volkswagen Aktiengesellschaft, 38436 Wolfsburg (DE)
(72) Erfinder: Morsch, Klaus-Dieter, 38102 Brauschweig (DE); Hillmann, Jürgen Dr., 38518 Gifhorn (DE)

(56) Entgegenhaltungen:
- EP-A- 0 433 903
- DE-A- 19 543 404
- US-A- 6 129 412
- PATENT ABSTRACTS OF JAPAN vol. 1996, no. 07, 31. Juli 1996 (1996-07-31) -& JP 08 072682 A (DAIHATSU MOTOR CO LTD), 19. März 1996 (1996-03-19)
- PATENT ABSTRACTS OF JAPAN vol. 2002, no. 09, 4. September 2002 (2002-09-04) -& JP 2002 154459 A (SUZUKI MOTOR CORP), 28. Mai 2002 (2002-05-28)
- PATENT ABSTRACTS OF JAPAN vol. 1996, no. 11, 29. November 1996 (1996-11-29) -& JP 08 175425 A (FUJI HEAVY IND LTD), 9. Juli 1996 (1996-07-09)

## Beschreibung

Die Erfindung betrifft eine Bodenstruktur an Kraftfahrzeugen nach dem Oberbegriff des Anspruchs 1.

Bodenstrukturen an Kraftfahrzeugen sind in den vielfältigsten Ausführungen bekannt. Beispielsweise ist es bekannt, einen vorderen und einen hinteren Bodenquerträger vorzusehen, welche sich zwischen zwei seitlich der Fahrzeugkarosserie angeordneten Schwellern erstrecken und mit diesen fest verbunden sind. Zwischen den Schwellern ist ferner ein die Fahrgastzelle nach unten abschließendes Bodenblech mit einem in Fahrzeuglängsrichtung weisenden Mitteltunnel angeordnet. Der Mitteltunnel ist seinerseits durch ein hutförmig nach innen in die Fahrgastzelle weisendes Blechteil gebildet. Zwischen dem Mitteltunnel und jedem Schweller kann des Weiteren jeweils ein sogenannter Sitzquerträger angeordnet sein, der zum einen den vorderen Sitz trägt, zum anderen der Versteifung der Bodenstruktur dient.

Aus der DE 41 39 331 A2 ist des Weiteren eine Bodenstruktur einer Karosserie eines Personenkraftwagens mit Sitzquerträgern als Hohlprofile zu beiden Seiten des Tunnels bekannt. Die Hohlprofile der Sitzquerträger sind dabei mit einem Gußteil als Tunneljoch mit im Querschnitt hutförmigen Profil verbunden, dass seinerseits in einem unteren Bereich mit einem nach oben gebogenen Teil des Bodenblechs und mit einem von oben her aufgesetzten Getriebetunnel zu beiden Seiten des Tunnels jeweils eine Hohlprofilstruktur bildet. Wie die Sitzquerträger konkret ausgebildet sind, ist nicht offenbart. Mit vorstehender Anordnung soll ein äußerst steifer Guß-Blech-Strangprofilverband mit abgestufter Energieaufnahme erzielbar sein, der im Falle eines Seitencrashes die auf die Karosseriestruktur einwirkenden Druckkräfte aufnimmt.

Des Weiteren sind verschiedenste Ausführungen der Ausbildung des Mitteltunnels offenbart. Überwiegend wird vorgeschlagen, denselben mittels aufgesetzter Blechschalen derart zu versteifen, dass ein doppelwandiger Hohlkörper oder bereichsweise Längshohlprofile gebildet werden. Diese Versteifungen können sowohl von außen als auch von innen auf den Mitteltunnel aufgebracht sein (DE 24 08 548 A1; DE 42 33 832 C2; DE 195 43 404 A1; DE 198 38 941 A1; EP 0 823 365 A2; EP 1 029 773 A2).

Schließlich ist aus der EP 0 433 903 A eine Bodenstruktur mit Sitzquerträgern bekannt, deren tunnelseitig angeordnete Sitzaufnahmen sich in die Außenkontur des Mitteltunnels erstrecken.

Aufgabe der vorliegenden Erfindung ist es, eine Bodenstruktur der gattungsgemäßen Art weiter zu verbessern, um eine gegenüber dem Stand der Technik erhöhte Steifigkeit sowohl in Fahrzeugquerrichtung als auch in Fahrzeuglängsrichtung zu erzielen.

Erfindungsgemäß wird die Aufgabe durch eine Bodenstruktur an Kraftfahrzeugen, umfassend einen vorderen und einen hinteren Bodenquerträger, welche sich ihrerseits quer zur Fahrzeuglängsachse zwischen zwei seitlich der Fahrzeugkarosserie respektive der Fahrgastzelle angeordneten Schwellern erstrecken und mit diesen fest verbunden sind, ein zwischen den Schwellern die Fahrgastzelle des Kraftfahrzeugs nach unten abschließendes Bodenblech, einen in Fahrzeuglängsrichtung angeordneten Mitteltunnel, der sich zwischen dem vorderen und dem hinteren Bodenquerträger erstreckt und an diesen angeschlossen ist, wobei zwischen jedem Schweller und dem Mitteltunnel fahrgastzellenseitig je ein Sitzquerträger angeordnet und mit demselben fest verbunden ist und wobei jeder Sitzquerträger der Bodenstruktur aus einem quer zur Fahrzeuglängsachse angeordneten mittleren Trägerprofil mit endseitigen in Fahrzeuglängsrichtung weisenden hohlprofilartigen hutförmigen Sitzaufnahmen besteht und die jeweils tunnelseitig angeordnete Sitzaufnahme als Verstärkungselement für den Mitteltunnel ausgebildet ist und sich in die Außenkontur des Mitteltunnels erstreckt, derart gelöst, dass sich an die tunnelseitig angeordnete Sitzaufnahme jedes Sitzquerträgers ein langgestrecktes in Richtung des vorderen und/oder hinteren Bodenquerträgers weisendes hutförmig ausgebildetes Tunnel-Verstärkungselement anschließt und mit dem Mitteltunnel fest verbunden ist. Im Falle eines Seitencrashs gewährleistet diese Anordnung insbesondere eine direkte und großflächige Kraftübertragung vom Schweller auf den Mitteltunnel und weiter auf die gegenüberliegende Schwelleranordnung, so dass ein großer Unterbodenbereich vorteilhaft in die Kraftaufnahme und Weiterleitung eingebunden werden kann. Die Sitzquerträger können dabei ein- oder mehrteilig ausgebildet sein, wobei bei einteiliger Ausbildung jeder Sitzquerträger zwischen dem Mitteltunnel und dem Schweller eingesetzt und mit denselben über die stirnseitig angeordneten Sitzaufnahmen fest verbunden ist.

Bei mehrteiliger, vorzugsweise dreiteiliger Ausbildung, ist das mittlere Trägerprofil jedes Sitzquerträgers an die vorab am Mitteltunnel befestigte Sitzaufnahme sowie an den Schweller angesetzt und mit denselben fest verbunden. Die schwellerseitig angeordnete Sitzaufnahme weist hierbei einen Ausschnitt für das mittlere Trägerprofil auf, ist über dasselbe gesetzt und fernerhin mit dem Schweller und/oder dem Trägerprofil fest verbunden.

In einer vorteilhaften Ausgestaltung der Erfindung bildet die tunnelseitig angeordnete Sitzaufnahme jedes Sitzquerträgers mit der Außenkontur des Mitteltunnels wenigstens bereichsweise ein geschlossenes Hohlprofil aus, wodurch eine weitere Versteifung des Mitteltunnels, insbesondere auch in Fahrzeuglängsrichtung zu verzeichnen ist.

Eine weitere vorteilhafte Ausgestaltung der Erfindung sieht vor, dass die tunnelseitig angeordneten Sitzaufnahmen der Sitzquerträger mit dem jeweils zugehörigen Tunnel-Verstärkungselement ein gemeinsames Bauteil ausbildend einstückig sein.

In Fortbildung der Erfindung können die beiden tunnelseitig angeordneten Sitzaufnahmen, gegebenenfalls samt der Tunnel-Verstärkungselemente, den Mitteltunnel überspannend zusammengeführt sein. Denkbar ist es fernerhin, die beiden den Mitteltunnel überspannenden Sitzaufnahmen, gegebenenfalls samt der Tunnel-Verstärkungselemente, einstückig auszubilden.

Als besonders vorteilhaft hat sich erwiesen, im Bereich des Anschlusses zwischen Mitteltunnel und hinterem und/oder vorderem Bodenquerträger den Endabschnitt des Tunnel-Verstärkungselementes nach außen herumzuführen und am hinteren respektive am vorderen Bodenquerträger festzulegen. Hierdurch wird insbesondere im Falle eines Frontalcrashes die Kraftweiterleitung in den hinteren Karosseriebereich hinein unterstützt und ein Abknicken der zueinander korrespondierenden Bauteile weitestgehend verhindert. Gleichermaßen kann gemäß einer weiteren Ausführungsvariante im Bereich des Anschlusses zwischen Mitteltunnel und hinterem respektive vorderem Bodenquerträger der Endabschnitt des Tunnel-Verstärkungselementes mit einem Verstärkungsblech versehen sein, welches nach außen herumgeführt und am hinteren respektive am vorderen Bodenquerträger festgelegt ist.

Wie die Erfindung weiter vorsieht, kann wie vorliegend in den beiden verbundenen tunnelseitig angeordneten Sitzaufnahmen die Anbindung für einen an sich bekannten Handbrems-Lagerbock integriert sein.

Weiterhin sind dem Mitteltunnel beidseitig im Bereich des Übergangs zum Bodenblech langgestreckte und gegebenenfalls hutförmig ausgebildete untere Tunnel-Verstärkungselemente zugeordnet, die von unten gegen das Bodenblech gesetzt sind und sich vom vorderen Bodenquerträger nach hinten bis wenigstens in Höhe der Sitzquerträger, vorzugsweise bis zum Fersenblech im unmittelbaren Bereich des hinteren Bodenquerträgers erstrecken. Hierdurch wird eine ergänzende Versteifung der Bodenstruktur derart erzielt, dass die Tunnel-Verstärkungselemente sich sozusagen an die Versteifungsstruktur des Mitteltunnels in Fahrzeugquerrichtung anschließen und diese Versteifungsstruktur nach außen hin erweitern.

Eine weitere erfindungsgemäße Maßnahme sieht vor, dass fahrgastzellenseitig beidseitig des Mitteltunnels wenigstens im Verbindungseckbereich von Mitteltunnel, vorderen Bodenquerträger und Bodenblech auf dem Bodenblech ein gegebenenfalls bis in die Außenkontur des Mitteltunnels reichendes Verstärkungsblech aufgebracht ist. Dadurch wird insbesondere eine verbesserte Versteifung des Fußraums der Fahrgastzelle erreicht.

Weiter wird vorgeschlagen, im vom Mitteltunnel überspannten Raum wenigstens im Übergangsbereich von Mitteltunnel und Fersenblech wenigstens ein querspantartiges Verstärkungsblech fest anzuordnen.

Wie die Erfindung schließlich noch vorsieht, können Träger und/oder Verstärkungselemente respektive -bleche und/oder Sitzaufnahmen zur weiteren Versteifung der Bodenstruktur aus höherfestem Stahlblech oder aus gegebenenfalls kalt- oder warmumgeformtem Stahlblech, welches nach der tailored-blank-Technik gefertigt sein kann, bestehen und/oder mit Versteifungssicken und/oder -stegen versehen sein.

Schlußendlich wird vorgeschlagen, dass einer oder mehrere der durch Träger und/oder Verstärkungselemente respektive -bleche und/oder Sitzaufnahmen gebildeten Hohlräume zur lokalen Erhöhung der Steifigkeit der Bodenstruktur mit einem aushärtenden Kunststoff- oder Metallschaum ausgefüllt ist/sind.

Die vorgeschlagene Anordnung hat im Hinblick auf den Stand der Technik den wesentlichen Vorteil, dass durch vorstehende Maßnahmen nicht nur eine äußerst steife Bodenstruktur realisiert kann, sondern auch eine Bodenstruktur, deren Steifigkeit in Abhängigkeit vom Verwendungszweck des Kraftfahrzeugs lokal an bestimmte frei wählbare Anforderungen definiert angepaßt werden kann.

Die Erfindung wird nachstehend anhand der in den Zeichnungen schematisch dargestellten Ausführungsbeispiele näher erläutert. Es zeigen:
- Figur 1: die erfindungsgemäße Bodenstruktur eines Kraftfahrzeugs, vorliegend eines PKW's, in einer perspektivischen Ansicht von unten,
- Figur 2: die schematische Ansicht der Bodenstruktur nach Fig. 1 von innerhalb der Fahrgastzelle gegen den vorderen Bodenquerträger gesehen,
- Figur 3: einen Längsschnitt l-l nach Fig. 2 mit der Seitenansicht des Mitteltunnels gemäß einer ersten Ausführungsvariante desselben,
- Figur 4: den Schnitt ll-ll nach Fig. 2,
- Figur 5: den Schnitt lll-lll nach Fig. 2,
- Figur 6: den Schnitt IV-IV nach Fig. 2,
- Figur 7: einen Längsschnitt l-l nach Fig. 2 mit der Seitenansicht des Mitteltunnels gemäß einer weiteren Ausführungsvariante desselben,
- Figur 8: die schematische Ansicht des Anschlusses des Mitteltunnels an den hinteren
Bodenquerträger im Bereich des Fersenbleches.

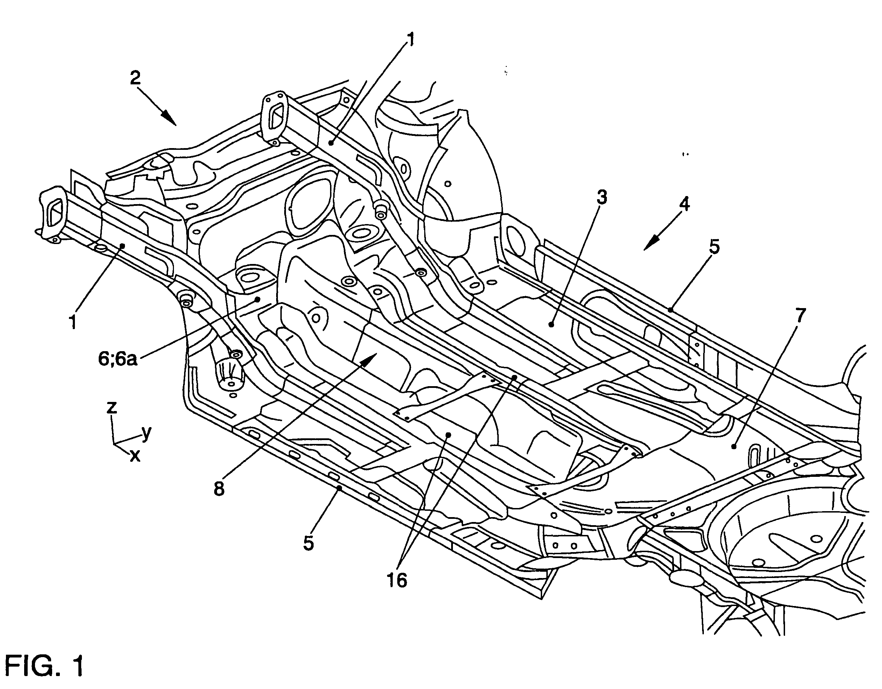

Fig. 1 zeigt den vorderen Unterbodenbereich eines Kraftfahrzeugs in einer perspektivischen Ansicht. Danach sind zwei an sich bekannte beidseitig des Kraftfahrzeugs angeordnete Längsträger 1 vom Vorderwagen 2 des Kraftfahrzeugs ausgehend und das nicht näher dargestellte Antriebsaggregat abstützend höhenversetzt nach unten unter ein Bodenblech 3 der Fahrgastzelle 4 geführt.

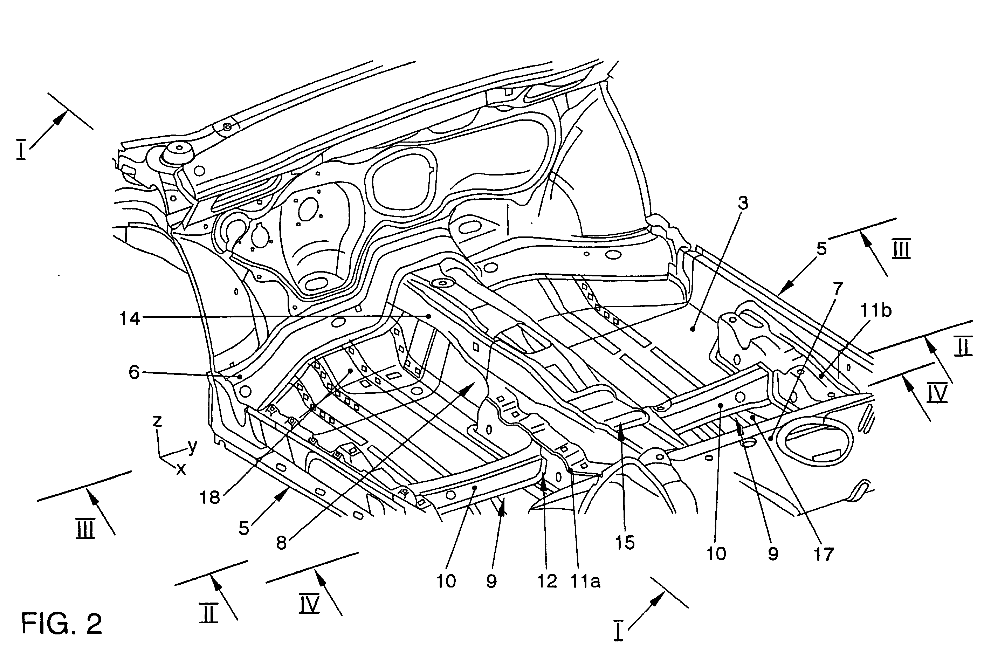

Die seitlich äußere Begrenzung der Kraftfahrzeugkarosserie bilden sogenannte beidseitig sich jeweils in Fahrzeuglängsrichtung erstreckende Schweller 5, die ihrerseits an einem quer zur Fahrzeuglängsachse angeordneten vorderen Bodenquerträger 6 und einem hinteren Bodenquerträger 7 angebunden sind. Mittig des Bodenbleches 3 ist ein in Fahrzeuglängsrichtung weisender Mitteltunnel 8 angeordnet, der seinerseits zu einem hutförmig nach innen in die Fahrgastzelle 4 weisenden Blechteil geformt ist. Zwischen dem Mitteltunnel 8 und jedem Schweller 5 ist des Weiteren jeweils ein sogenannter Sitzquerträger 9 angeordnet (Fig. 2).

Besagte Längsträger 1 stützen sich im Wesentlichen an dem vorderen Bodenquerträger 6 respektive dem zugehörigen Spritzblech 6a, am Bodenblech 3 und wie vorliegend nachfolgend an dem Sitzquerträger 9 ab (Fig. 1), können jedoch auch weiter nach hinten bis in Höhe des hinteren Bodenquerträgers 7 gezogen und mit diesem fest verbunden sein (nicht näher dargestellt).

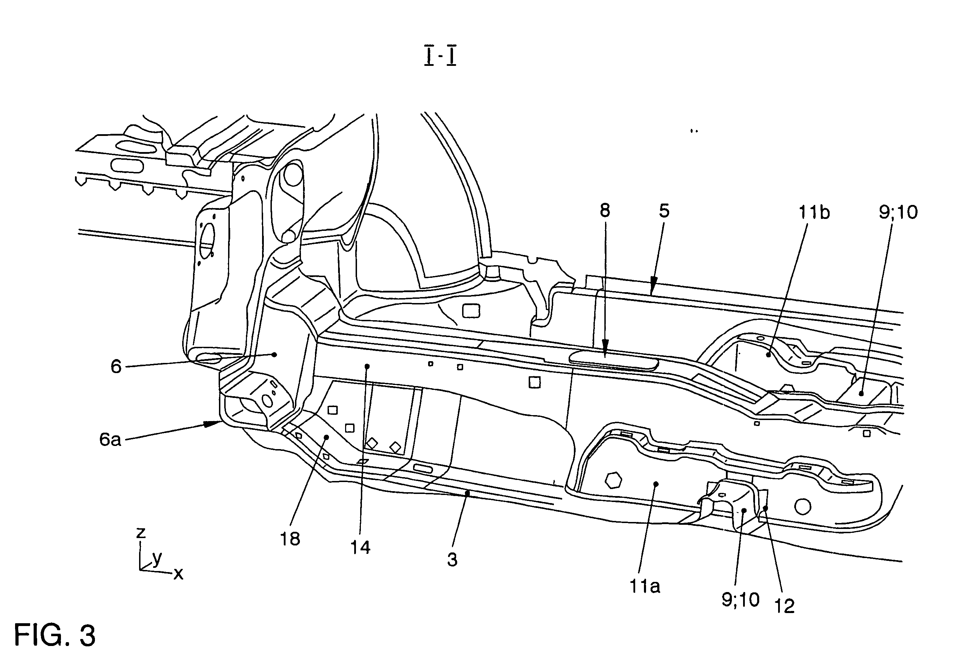

Wie aus Fig. 2 ebenfalls ersichtlich, besteht jeder Sitzquerträger 9 aus einem quer zur Fahrzeuglängsachse angeordneten mittleren Trägerprofil 10 mit endseitigen in Fahrzeuglängsrichtung weisenden hohlprofilartigen hutförmigen Sitzaufnahmen 11 a, 11b. Das Trägerprofil 10 weist vorliegend einen nach unten offenen u-förmigen Profilquerschnitt auf (Fig. 3), jedoch sind weitere an sich bekannte Profilquerschnitte, wie beispielsweise T-, DoppelT-oder Kastenprofile denkbar.

Die tunnelseitig, also innen angeordnete Sitzaufnahme 11a ist als eigenständiges Verstärkungselement ausgebildet, erstreckt sich in die Außenkontur des Mitteltunnels 8 und ist mit diesem fest verbunden, vorzugsweise verschweißt. Denkbar ist es jedoch auch, eine Klebeverbindung vorzusehen oder dieselben mittels an sich bekannter mechanischer Verbindungsmittel, wie beispielsweise Schrauben oder Niete, miteinander fest zu verbinden.

Die Sitzquerträger 9 können sowohl ein oder mehrteilig ausgebildet sein.

Sind die Sitzquerträger 9 einteilig ausgebildet, beispielsweise einstückig durch ein an sich bekanntes Tiefziehverfahren hergestellt, werden diese zwischen dem Mitteltunnel 8 und dem jeweiligen Schweller 5 eingesetzt und mit denselben über die stirnseitig angeordneten Sitzaufnahmen 11a, 11b wie vorbeschrieben fest verbunden. Ferner ist es angezeigt, das mittlere Trägerprofil 10 und/oder die Sitzaufnahmen 11a, 11b mit dem Bodenblech 3 fest zu verbinden, um Schwingungen desselben, einhergehend mit störenden Geräuschen, zu mindern.

Bei einer mehrteiligen Ausbildung der Sitzquerträger 9 hat sich als bevorzugte Ausführungsform die vorliegend dreiteilige bewährt. Hierbei ist das mittlere Trägerprofil 10 jedes Sitzquerträgers 9 an die vorab am Mitteltunnel 8 befestigte Sitzaufnahme 11a sowie an den Schweller 5 mittels Stegblechen 12 angesetzt und mit denselben, gegebenenfalls auch mit dem Bodenblech 3, fest verbunden. Nachfolgend ist die schwellerseitig angeordnete Sitzaufnahme 11b, die ihrerseits einen Ausschnitt für das mittlere Trägerprofil 10 aufweist, über dasselbe gesetzt und ebenfalls mit dem Schweller 5 und/oder dem Trägerprofil 10 fest verbunden (insbesondere Fig. 2 und 3). Selbstverständlich ist auch eine Ausführungsform denkbar und wird durch die Erfindung mit erfaßt, die einen zweiteilig ausgebildeten Sitzquerträger 9 vorsieht beispielsweise derart, dass das Trägerprofil 10 und die schwellerseitig angeordnete Sitzaufnahme 11b einstückig ausgebildet sind und gegen die gesondert gefertigte tunnelseitig angeordnete Sitzaufnahme 11a und den Schweller 5 gesetzt werden (nicht näher dargestellt).

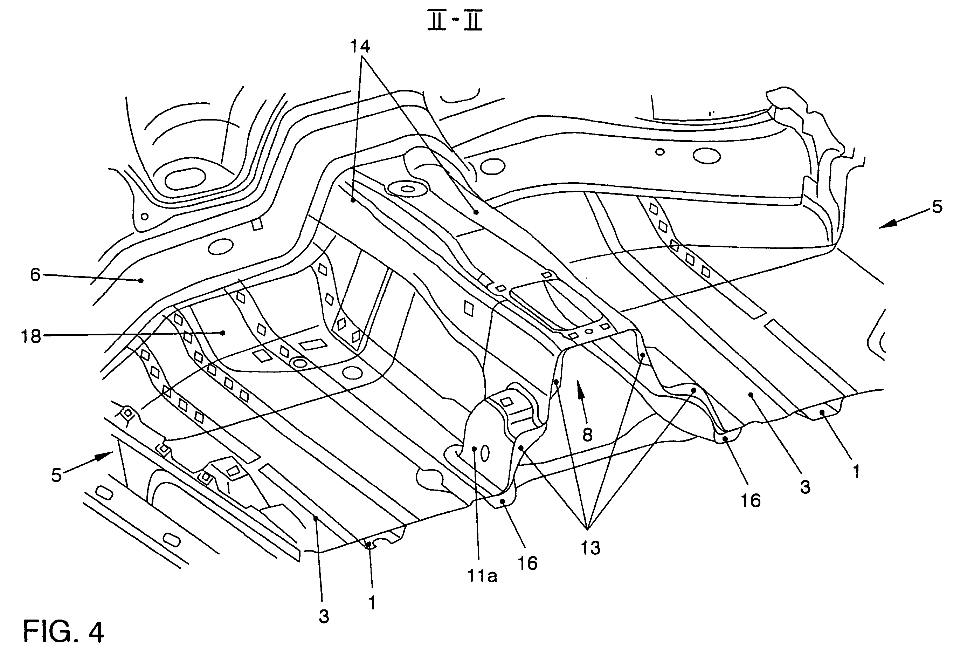

Gem. Fig. 4 bildet die tunnelseitig angeordnete Sitzaufnahme 11a jedes Sitzquerträgers 9 mit der Außenkontur des Mitteltunnels 8 wenigstens bereichsweise ein geschlossenes Hohlprofil 13 aus.

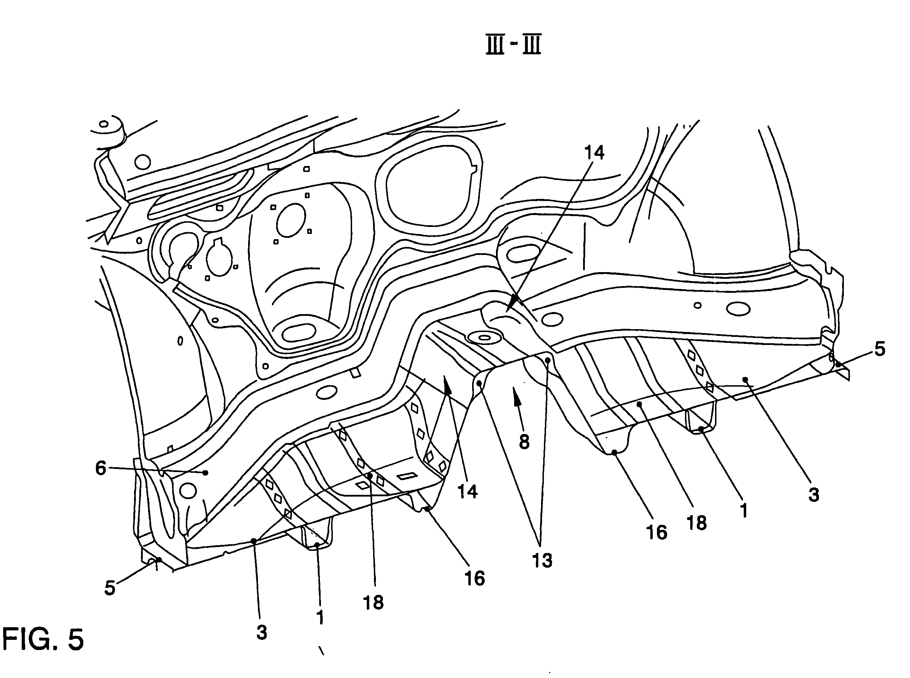

Wie in den Fig. 2 bis 6 weiter gezeigt, erstreckt sich die tunnelseitig angeordnete Sitzaufnahme 11a bis in den oberen Bereich des Mitteltunnels 8. An diese Sitzaufnahme 11a schließt sich ein langgestrecktes in Richtung des vorderen Bodenquerträgers 6 weisendes hutförmig ausgebildetes Tunnel-Verstärkungselement 14 an und ist mit dem Mitteltunnel 8 ebenfalls fest verbunden, wodurch ebenfalls ein geschlossenes Hohlprofil 13 ausgebildet wird (Fig. 5).

Als zweckmäßig wird angesehen, auch in Richtung des hinteren Bodenquerträgers 7 ein solches Tunnel-Verstärkungselement 14 anzuordnen (nicht näher dargestellt). Dadurch ist beidseitig des Mitteltunnels 8 ein vom vorderen bis zum hinteren Bodenquerträger 6, 7 durchgehender, den Mitteltunnel 8 versteifender Längsträger geschaffen.

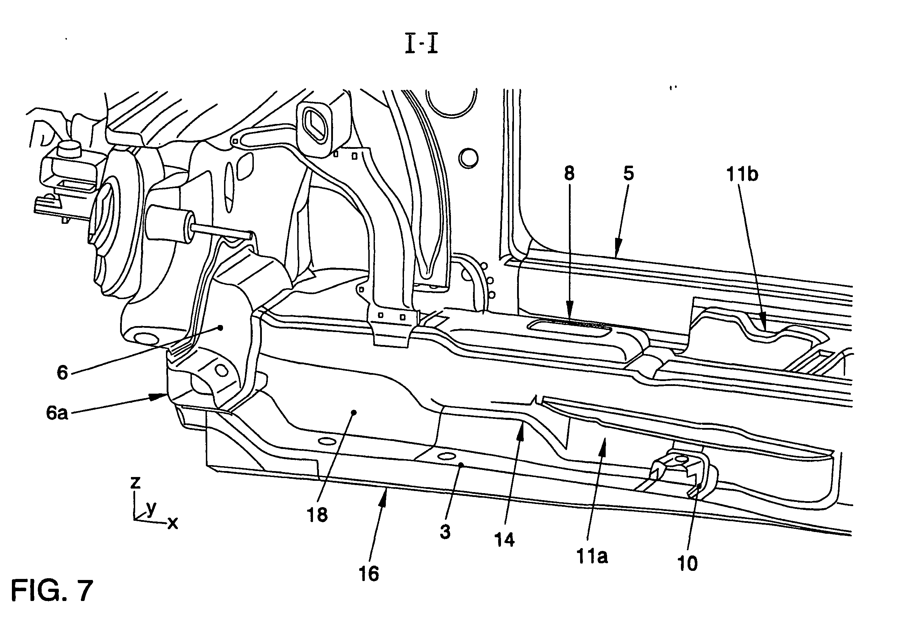

In einer weiteren Ausführungsvariante sind die tunnelseitig angeordneten Sitzaufnahmen 11 a und die jeweils zugehörigen Tunnel-Verstärkungselemente 14 einstückig ausgebildet (Fig. 7), welches insbesondere dem Wunsch der Fahrzeughersteller nach einer Bauteilereduzierung Rechnung trägt. Femer werden dadurch sich gegebenenfalls negativ auswirkende Steifigkeitssprünge vermieden.

Um den Effekt der Versteifung des Mitteltunnels 8 noch weiter zu verbessern, können die beiden tunnelseitig angeordneten Sitzaufnahmen 11a, gegebenenfalls samt der Tunnel-Verstärkungselemente 14, den Mitteltunnel 8 überspannend zusammengeführt und bei Bedarf auch einstückig ausgebildet sein. Durch diese Maßnahme ist vorteilhaft die Möglichkeit gegeben, in diesen Zusammenschluß der Sitzaufnahmen 11a eine Anbindung 15 für einen nicht näher dargestellten Handbrems-Lagerbock, beispielsweise in Form von Auflageflächen mit Bohrungen für Befestigungsmittel, zu integrieren (Fig. 2).

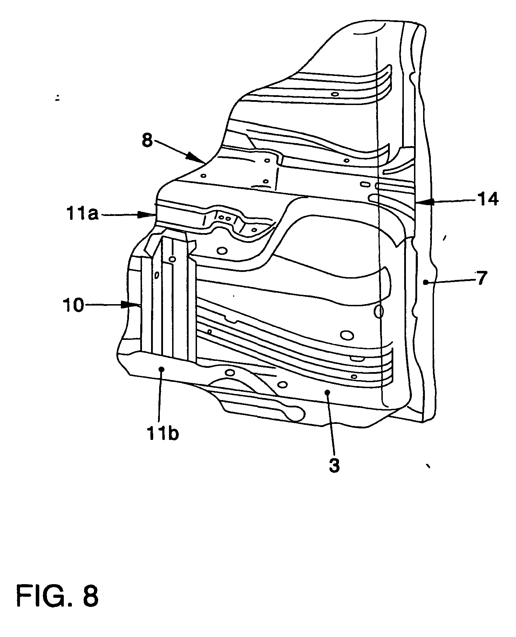

Wie in Fig. 8 schematisch näher dargestellt, ist im Bereich des Anschlusses zwischen Mitteltunnel 8 und hinterem Bodenquerträger 7 der Endabschnitt des Tunnel-Verstärkungselementes 14 nach außen in Richtung der Schweller 5 herumgeführt und am hinteren Bodenquerträger 7 festgelegt. Mit dieser Maßnahme wird, wie bereits oben ausgeführt, insbesondere im Falle eines Frontalcrashes die Kraftweiterleitung in den hinteren Karosseriebereich hinein unterstützt und ein Abknicken der zueinander korrespondierenden Bauteile, nämlich des Mitteltunnels 8 zum hinteren Bodenquerträger 7, weitestgehend verhindert. Gemäß einer weiteren nicht näher dargestellten Ausführungsvariante kann im Bereich des Anschlusses zwischen Mitteltunnel 8 und hinterem Bodenquerträger 7 der Endabschnitt des Tunnel-Verstärkungselementes 14 stumpf auf den hinteren Bodenquerträger 7 zulaufen und wie vorstehend wirkungsgleich mit einem Verstärkungsblech versehen sein, welches nach außen herumgeführt und am hinteren Bodenquerträger 7 festgelegt ist.

Für den Fachmann ist leicht nachvollziehbar, dass vorstehende Anbindung der Tunnel-Verstärkungselemente 14 an den hinteren Bodenquerträger 7 auch für die Anbindung an den vorderen Bodenquerträger 6 tauglich ist und demgemäß durch die Erfindung mit erfaßt wird (nicht näher dargestellt).

Insbesondere aus den Fig. 1, 4 und 5 sind des Weiteren dem Mitteltunnel 8 beidseitig im Bereich des Übergangs zum Bodenblech 3 langgestreckte und vorliegend hutförmig ausgebildete untere Tunnel-Verstärkungselemente 16 zu entnehmen, die von unten gegen das Bodenblech 3 gesetzt sind und sich vom vorderen Bodenquerträger 6 nach hinten bis wenigstens in Höhe der Sitzquerträger 9, vorliegend und vorzugsweise bis zum Fersenblech 16 im unmittelbaren Bereich des hinteren Bodenquerträgers 7 erstrecken.

Mit dieser Maßnahme wird, wie bereits vorgetragen, vorteilhaft die Versteifungsstruktur des Mitteltunnels 8 nach außen hin erweitert.

Des Weiteren ist gemäß vorliegendem Ausführungsbeispiel fahrgastzellenseitig beidseitig des Mitteltunnels 8 wenigstens im Verbindungseckbereich von Mitteltunnel 8, vorderen Bodenquerträger 6 und Bodenblech 3 auf dem Bodenblech 3 ein bis in die Außenkontur des Mitteltunnels 8 reichendes Verstärkungsblech 18 aufgebracht, wodurch eine bessere Versteifung des Fußraums der Fahrgastzelle 4 erzielbar ist (Fig. 2 bis 7).

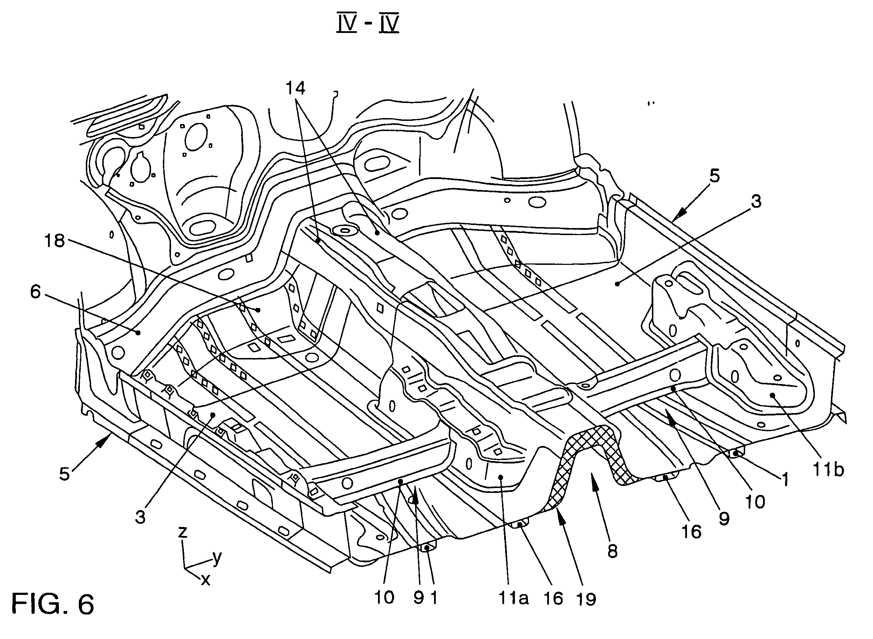

Weiterhin hat sich gem. Fig. 6 im Übergangsbereich von Mitteltunnel 8 und Fersenblech 16 ein querspantartiges Verstärkungsblech 19 bewährt, welches vorliegend brillenförmig ausgebildet und in dem vom Mitteltunnel 8 überspannten Raum fest angeordnet ist. Die Erfindung beschränkt sich jedoch nicht auf die vorliegende konkrete, d. h., lokal begrenzte Ausbildung einer Querversteifung des Mitteltunnels 8, sondern umfaßt auch eine Mehrzahl solcher querspantartigen Verstärkungsbleche 19, die axial hintereinander an prädestinierten Stellen des Mitteltunnels 8 angebracht werden können, um insbesondere die Quersteifigkeit des gesamten Mitteltunnels 8 wirkungsvoll zu erhöhen.

Für den Fall, dass besonders hohe Beanspruchungen der Bodenstruktur zu erwarten sind, kann es angezeigt sein, ausgewählte oder die Gesamtheit der Träger 1, 5, 6, 7, 10 und/oder Verstärkungselemente respektive -bleche 14, 15, 16, 17, 18 und/oder Sitzaufnahmen 11a, 11b sowie - im Falle eines mehrteiligen Bodens - das Tunneleinsatzteil und/oder andere Teile der Bodenversteifungsstruktur statt aus herkömmlichem aus höherfestem Stahl oder aus gegebenenfalls kalt- oder warmumgeformtem Stahlblech, welches nach der an sich bekannten tailored-blank-Technik gefertigt sein kann, auszubilden. Dabei ist es für besonders hoch belastete Bauteile von Vorteil, wenn diese aus warmumgeformtem, höchstfestem Stahlblech bestehen. Ebenso kann es angezeigt sein, die Strukturen dieser Bauteile mit nicht näher dargestellten Versteifungssicken und/oder -stegen zu versehen und/oder durch diese Bauteile gebildete Hohlräume zur weiteren lokalen Erhöhung der Steifigkeit der Bodenstruktur mit einem an sich bekannten aushärtenden Kunststoff- oder Metallschaum auszufüllen.

## Patentansprüche

1. Bodenstruktur an Kraftfahrzeugen, umfassend einen vorderen und einen hinteren Bodenquerträger, welche sich ihrerseits quer zur Fahrzeuglängsachse zwischen zwei seitlich der Fahrzeugkarosserie respektive der Fahrgastzelle angeordneten Schwellern erstrecken und mit diesen fest verbunden sind, ein zwischen den Schwellern die Fahrgastzelle des Kraftfahrzeugs nach unten abschließendes Bodenblech, einen in Fahrzeuglängsrichtung angeordneten Mitteltunnel, der sich zwischen dem vorderen und dem hinteren Bodenquerträger erstreckt und an diesen angeschlossen ist, wobei zwischen jedem Schweller und dem Mitteltunnel fahrgastzellenseitig je ein Sitzquerträger angeordnet und mit denselben fest verbunden ist und wobei jeder Sitzquerträger (9) aus einem quer zur Fahrzeuglängsachse angeordneten mittleren Trägerprofil (10) mit endseitigen in Fahrzeuglängsrichtung weisenden hohlprofilartigen hutförmigen Sitzaufnahmen (11a, 11b) besteht und die jeweils tunnelseitig angeordnete Sitzaufnahme (11a) als Verstärkungselement für den Mitteltunnel (8) ausgebildet ist und sich in die Außenkontur des Mitteltunnels (8) erstreckt,
**dadurch gekennzeichnet, dass**
sich an die tunnelseitig angeordnete Sitzaufnahme (11a) jedes Sitzquerträgers (9) ein langgestrecktes in Richtung des vorderen und/oder hinteren Bodenquerträgers (6, 7) weisendes hutförmig ausgebildetes Tunnel-Verstärkungselement (14) anschließt und mit dem Mitteltunnel (8) fest verbunden ist.

2. Bodenstruktur nach Anspruch 1,
**dadurch gekennzeichnet, dass**
die Sitzquerträger (9) ein- oder mehrteilig ausgebildet sind.

3. Bodenstruktur nach einem der Ansprüche 1 und 2,
**dadurch gekennzeichnet, dass**
bei einteiliger Ausbildung jeder Sitzquerträger (9) zwischen dem Mitteltunnel (8) und dem Schweller (5) eingesetzt und mit denselben über die stirnseitig angeordneten Sitzaufnahmen (11a, 11b) fest verbunden ist.

4. Bodenstruktur nach einem der Ansprüche 1 und 2,
**dadurch gekennzeichnet, dass**
bei mehrteiliger, vorzugsweise dreiteiliger Ausbildung, das mittlere Trägerprofil (10) jedes Sitzquerträgers (9) an die vorab am Mitteltunnel (8) befestigte Sitzaufnahme (11a) sowie an den Schweller (5) angesetzt und mit denselben fest verbunden ist und die schwellerseitig angeordnete Sitzaufnahme (11b) einen Ausschnitt für das mittlere Trägerprofil (10) aufweist sowie über dasselbe gesetzt mit dem Schweller (5) und/oder dem Trägerprofil (10) fest verbunden ist.

5. Bodenstruktur nach einem der Ansprüche 1 bis 4,
**dadurch gekennzeichnet, dass**
die tunnelseitig angeordnete Sitzaufnahme (11a) jedes Sitzquerträgers (9), mit der Außenkontur des Mitteltunnels (8) wenigstens bereichsweise ein geschlossenes Hohlprofil (13) ausbildet.

6. Bodenstruktur nach einem der Ansprüche 1 bis 5,
**dadurch gekennzeichnet, dass**
die tunnelseitig angeordneten Sitzaufnahmen (11a) der Sitzquerträger (9) mit dem jeweils zugehörigen Tunnel-Verstärkungselement (14) ein gemeinsames Bauteil ausbildend einstückig sind.

7. Bodenstruktur nach einem der Ansprüche 1 bis 6,
**dadurch gekennzeichnet, dass**
die beiden tunnelseitig angeordneten Sitzaufnahmen (11a), gegebenenfalls samt der Tunnel-Verstärkungselemente (14), den Mitteltunnel (8) überspannend zusammengeführt sind.

8. Bodenstruktur nach Anspruch 7,
**dadurch gekennzeichnet, dass**
die beiden den Mitteltunnel (8) überspannenden Sitzaufnahmen (), gegebenenfalls samt der Tunnel-Verstärkungselemente (14), einstückig ausgebildet sind.

9. Bodenstruktur nach einem der Ansprüche 1 bis 8,
**dadurch gekennzeichnet, dass**
im Bereich des Anschlusses zwischen Mitteltunnel (8) und hinterem und/oder vorderem Bodenquerträger (6, 7) der Endabschnitt des Tunnel-Verstärkungselementes (14) nach außen herumgeführt und am hinteren respektive am vorderen Bodenquerträger (6, 7) festgelegt ist.

10. Bodenstruktur nach einem der Ansprüche 1 bis 8,
**dadurch gekennzeichnet, dass**
im Bereich des Anschlusses zwischen Mitteltunnel (8) und hinterem respektive vorderem Bodenquerträger (6, 7) der Endabschnitt des Tunnel-Verstärkungselementes (14) mit einem Verstärkungsblech versehen ist, welches nach außen herumgeführt und am hinteren respektive am vorderen Bodenquerträger (6, 7) festgelegt ist.

11. Bodenstruktur nach einem der Ansprüche 7 und 8,
**dadurch gekennzeichnet, dass**
in den beiden verbundenen tunnelseitig angeordneten Sitzaufnahmen (11a) die Anbindung (15) für einen Handbrems-Lagerbock integriert ist.

12. Bodenstruktur nach einem der Ansprüche 1 bis 11,
**dadurch gekennzeichnet, dass**
dem Mitteltunnel (8) beidseitig im Bereich des Übergangs zum Bodenblech (3) langgestreckte und gegebenenfalls hutförmig ausgebildete untere Tunnel-Verstärkungselemente (16) zugeordnet sind, die von unten gegen das Bodenblech (3) gesetzt sind und sich vom vorderen Bodenquerträger (6) nach hinten bis wenigstens in Höhe der Sitzquerträger (9), vorzugsweise bis zum Fersenblech (17) im unmittelbaren Bereich des hinteren Bodenquerträgers (7) erstrecken.

13. Bodenstruktur nach einem der Ansprüche 1 bis 12,
**dadurch gekennzeichnet, dass**
fahrgastzellenseitig beidseitig des Mitteltunnels (8) wenigstens im Verbindungseckbereich von Mitteltunnel (8), vorderen Bodenquerträger (6) und Bodenblech (3) auf dem Bodenblech (3) ein gegebenenfalls bis in die Außenkontur des Mitteltunnels (8) reichendes Verstärkungsblech (18) aufgebracht ist.

14. Bodenstruktur nach einem der Ansprüche 1 bis 13,
**dadurch gekennzeichnet, dass**
im vom Mitteltunnel () überspannten Raum wenigstens im Übergangsbereich von Mitteltunnel (8) und Fersenblech (17) wenigstens ein querspantartiges Verstärkungsblech (19) fest angeordnet ist.

15. Bodenstruktur nach einem der Ansprüche 1 bis 14,
**dadurch gekennzeichnet, dass**
Träger (1, 5, 6, 7, 10) und/oder Verstärkungselemente respektive -bleche (14, 15, 16, 17, 18) und/oder Sitzaufnahmen (11a, 11b) aus höherfestem Stahlblech bestehen.

16. Bodenstruktur nach einem der Ansprüche 1 bis 14,
**dadurch gekennzeichnet, dass**
Träger (1, 5, 6, 7, 10) und/oder Verstärkungselemente respektive -bleche (14, 15, 16, 17, 18) und/oder Sitzaufnahmen (11a, 11b) aus gegebenenfalls kalt- oder warmumgeformtem Stahlblech, welches nach der tailored-blank-Technik gefertigt sein kann, bestehen.

17. Bodenstruktur nach einem der Ansprüche 1 bis 16,
**dadurch gekennzeichnet, dass**
Träger (1, 5, 6, 7, 10) und/oder Verstärkungselemente respektive -bleche (14, 15, 16, 17, 18) und/oder Sitzaufnahmen (11a,11b) mit Versteifungssicken und/oder -stegen versehen sind.

18. Bodenstruktur nach einem der Ansprüche 1 bis 17,
**dadurch gekennzeichnet, dass**
einer oder mehrere der durch Träger (1, 5, 6, 7, 10) und/oder Verstärkungselemente respektive -bleche (14, 15, 16, 17, 18) und/oder Sitzaufnahmen (11a, 11b) gebildeten Hohlräume zur weiteren lokalen Erhöhung der Steifigkeit der Bodenstruktur mit einem aushärtenden Kunststoff- oder Metallschaum ausgefüllt ist/sind.

## Claims

1. Floor structure for motor vehicles, comprising a front and a rear floor crossmember which extend for their part transversely with respect to the vehicle longitudinal axis between two sills which are arranged at the sides of the vehicle body or the passenger cell, the floor crossmembers being connected fixedly to the said sills, also comprising a floor panel which closes off the passenger cell of the motor vehicle at the bottom between the sills, a central tunnel which is arranged in the vehicle longitudinal direction, extends between the front and the rear floor crossmembers and is connected to the latter, in each case one seat crossmember being arranged on the passenger-cell side between each sill and the central tunnel and being connected fixedly to the latter, and each seat crossmember (9) comprising a central carrier profile (10) which is arranged transversely with respect to the vehicle longitudinal axis and has hollow-profile cup-shaped seat receptacles (11a, 11b) at the ends which point in the vehicle longitudinal direction, and the seat receptacle (11a) which is arranged in each case on the tunnel side being configured as a reinforcement element for the central tunnel (8) and extending into the outer contour of the central tunnel (8), **characterized in that** the seat receptacle (11a), arranged on the tunnel side, of each seat crossmember (9) is adjoined by an elongate tunnel reinforcement element (14) which is of cup-shaped configuration and points in the direction of the front and/or rear floor crossmember (6, 7), the said tunnel reinforcement element (14) being connected fixedly to the central tunnel (8).

2. Floor structure according to Claim 1, **characterized in that** the seat crossmembers (9) are of single-part or multiple-part configuration.

3. Floor structure according to either of Claims 1 and 2, **characterized in that**, in the case of a single-part configuration, each seat crossmember (9) is inserted between the central tunnel (8) and the sill. (5) and is connected fixedly to the latter via the seat receptacles (11a, 11b) which are arranged at the ends.

4. Floor structure according to either of Claims 1 and 2, **characterized in that**, in the case of a multiple-part, preferably three-part, configuration, the central carrier profile (10) of each seat crossmember (9) is attached to the seat receptacle (11a), which has been fastened in advance to the central tunnel (8), and to the sill (5) and is connected fixedly to the latter, and the seat receptacle (11b) which is arranged on the sill side has a cut-out for the central carrier profile (10) and is connected fixedly to the sill (5) and/or the carrier profile (10) in a manner which is set above the said central carrier profile (10).

5. Floor structure according to one of Claims 1 to 4, **characterized in that** the seat receptacle (11a), arranged on the tunnel side, of each seat crossmember (9) forms, together with the outer contour of the central tunnel (8), a closed hollow profile (13) at least in regions.

6. Floor structure according to one of Claims 1 to 5, **characterized in that** the seat receptacles (11a), arranged on the tunnel side, of the seat crossmembers (9) are integral with the respectively assigned tunnel reinforcement element (14) so as to form a common component.

7. Floor structure according to one of Claims 1 to 6, **characterized in that** the two seat receptacles (11a) which are arranged on the tunnel side, optionally including the tunnel reinforcement elements (14), are connected together so as to bridge the central tunnel (8).

8. Floor structure according to Claim 7, **characterized in that** the two seat receptacles (11a) which bridge the central tunnel (8) are of integral configuration, optionally including the tunnel reinforcement elements (14).

9. Floor structure according to one of Claims 1 to 8, **characterized in that**, in the region of the connection between the central tunnel (8) and the rear and/or front floor crossmember (6, 7), the end section of the tunnel reinforcement element (14) is guided around outwardly and is fixed at the rear or at the front floor crossmember (6, 7) respectively.

10. Floor structure according to one of Claims 1 to 8, **characterized in that**, in the region of the connection between the central tunnel (8) and the rear or front floor crossmember (6, 7) respectively, the end section of the tunnel reinforcement element (14) is provided with a reinforcement plate which is guided around outwardly and is fixed at the rear or at the front floor crossmember (6, 7) respectively.

11. Floor structure according to either of Claims 7 and 8, **characterized in that** the connection (15) for a handbrake bearing block is integrated into the two connected seat receptacles (11a) which are arranged on the tunnel side.

12. Floor structure according to one of Claims 1 to 11, **characterized in that** the central tunnel (8) is assigned elongate and optionally cup-shaped lower tunnel reinforcement elements (16), on both sides in the.region of the transition to the floor panel (3), which are set against the floor panel (3) from below and extend from the front floor crossmember (6) backwards as far as at least the level of the seat crossmembers (9), preferably as far as the heel plate (17) in the immediate region of the rear floor crossmember (7).

13. Floor structure according to one of Claims 1 to 12, **characterized in that** a reinforcement plate (18) which optionally reaches into the outer contour of the central tunnel (8) is applied, on both sides of the central tunnel (8) and on the passenger-cell side, to the floor panel (3) at least in the connecting corner region of the central tunnel (8), the front floor crossmember (6) and the floor panel (3).

14. Floor structure according to one of Claims 1 to 13, **characterized in that** at least one reinforcement plate (19) in the manner of a transverse couple is arranged fixedly in the space which is bridged by the central tunnel (8), at least in the transitional region of the central tunnel (8) and the heel plate (17).

15. Floor structure according to one of Claims 1 to 14, **characterized in that** carriers (1, 5, 6, 7, 10) and/or reinforcement elements or plates (14, 15, 16, 17, 18) respectively and/or seat receptacles (11a, 11b) are composed of steel plate with a relatively high strength.

16. Floor structure according to one of Claims 1 to 14, **characterized in that** carriers (1, 5, 6, 7, 10) and/or reinforcement elements or plates respectively (14, 15, 16, 17, 18) and/or seat receptacles (11a, 11b) are composed of steel plate which has been optionally cold-formed or hot-formed and can be manufactured according to the tailored blank technique.

17. Floor structure according to one of Claims 1 to 16, **characterized in that** carriers (1, 5, 6, 7, 10) and/or reinforcement elements or plates respectively (14, 15, 16, 17, 18) and/or seat receptacles (11a, 11b) are provided with reinforcing beads and/or webs.

18. Floor structure according to one of Claims 1 to 17, **characterized in that** one or more of the cavities which are formed by carriers (1, 5, 6, 7, 10) and/or reinforcement elements or plates respectively (14, 15, 16, 17, 18) and/or seat receptacles (11a, 11b) is/are filled with a curable plastic or metal foam for the further local increase of the rigidity of the floor structure.

## Revendications

1. Structure de plancher pour véhicules automobiles, comprenant un support transversal de plancher avant et arrière, qui s'étendent pour leur part transversalement à l'axe longitudinal du véhicule entre deux bas de marche disposés latéralement à la carrosserie du véhicule par rapport à l'habitacle des passagers et qui sont reliés fixement à ceux-ci, une tôle de plancher fermant vers le bas l'habitacle des passagers du véhicule automobile entre les bas de marche, un tunnel central disposé dans la direction longitudinale du véhicule, qui s'étend entre les supports transversaux de plancher avant et arrière et qui leur est raccordé, entre chaque bas de marche et le tunnel central étant disposé, du côté de l'habitacle des passagers, un support transversal de siège respectif qui leur est relié fixement, et chaque support transversal de siège (9) se composant d'un profilé de support central (10) disposé transversalement à l'axe longitudinal du véhicule avec des logements pour sièges (11a, 11b) en forme de chapeau, de type profilés creux, tournés dans la direction longitudinale du véhicule du côté de l'extrémité, et le logement pour siège (11a) disposé respectivement du côté du tunnel étant réalisé sous forme d'élément de renforcement pour le tunnel central (8) et s'étendant dans le contour extérieur du tunnel central (8),
**caractérisée en ce que**
un élément de renforcement du tunnel (14) étendu en longueur, réalisé en forme de chapeau et tourné dans la direction du support transversal de plancher avant et/ou arrière (6, 7), se raccorde au logement pour siège (11a) disposé du côté du tunnel de chaque support transversal de siège (9), et est relié fixement au tunnel central (8).

2. Structure de plancher selon la revendication 1,
**caractérisée en ce que**
les supports transversaux de sièges (9) sont réalisés en une ou en plusieurs parties.

3. Structure de plancher selon l'une quelconque des revendications 1 et 2,
**caractérisée en ce que**
pour une réalisation en une seule partie, chaque support transversal de siège (9) est inséré entre le tunnel central (8) et le bas de marche (5) et leur est relié fixement par l'intermédiaire des logements pour sièges (11a, 11b) disposés du côté frontal.

4. Structure de plancher selon l'une quelconque des revendications 1 et 2,
**caractérisée en ce que**
pour une réalisation en plusieurs parties, de préférence en trois parties, le profilé de support central (10) de chaque support transversal de siège (9) est placé sur le logement de siège (11a) fixé préalablement au tunnel central (8) ainsi que sur le bas de marche (5), et leur est relié fixement, et le logement pour siège (11b) disposé du côté du bas de marche présente une découpure pour le profilé de support central (10), et, positionné par-dessus celui-ci, est relié fixement au bas de marche (5) et/ou au profilé de support (10).

5. Structure de plancher selon l'une quelconque des revendications 1 à 4,
**caractérisée en ce que**
le logement pour siège (11a) disposé du côté du tunnel de chaque support transversal de siège (9) forme avec le contour extérieur du tunnel central (8), au moins en partie, un profilé creux fermé (13).

6. Structure de plancher selon l'une quelconque des revendications 1 à 5,
**caractérisée en ce que**
les logements pour sièges (11a) disposés du côté du tunnel des supports transversaux de sièges (9) sont réalisés d'une seule pièce avec l'élément de renforcement du tunnel associé respectif (14) en formant un composant commun.

7. Structure de plancher selon l'une quelconque des revendications 1 à 6,
**caractérisée en ce que**
les deux logements pour sièges (11a) disposés du côté du tunnel, éventuellement y compris les éléments de renforcement du tunnel (14), sont réunis en chevauchant le tunnel central (8).

8. Structure de plancher selon la revendication 7,
**caractérisée en ce que**
les deux logements pour sièges (11a) chevauchant le tunnel central (8), éventuellement y compris les éléments de renforcement du tunnel (14), sont réalisés d'une seule pièce.

9. Structure de plancher selon l'une quelconque des revendications 1 à 8,
**caractérisée en ce que**
dans la région du raccordement entre le tunnel central (8) et le support transversal de plancher arrière et/ou avant (6, 7), la portion d'extrémité de l'élément de renforcement du tunnel (14) est tournée vers l'extérieur et est fixée au support transversal de plancher arrière, respectivement avant (6, 7).

10. Structure de plancher selon l'une quelconque des revendications 1 à 8,
**caractérisée en ce que**
dans la région du raccordement entre le tunnel central (8) et le support transversal de plancher arrière, respectivement avant (6, 7), la portion d'extrémité de l'élément de renforcement du tunnel (14) est pourvue d'une tôle de renforcement qui est tournée vers l'extérieur et est fixée au support transversal de plancher arrière, respectivement avant (6, 7).

11. Structure de plancher selon l'une quelconque des revendications 7 et 8,
**caractérisée en ce que**
la liaison (15) pour un palier de frein à main est intégrée dans les deux logements pour sièges (11a) disposés du côté du tunnel et reliés.

12. Structure de plancher selon l'une quelconque des revendications 1 à 11,
**caractérisée en ce que**
des éléments de renforcement du tunnel inférieurs (16) étirés en longueur et réalisés éventuellement en forme de chapeau sont associés au tunnel central (8) de part et d'autre dans la région du passage à la tôle de plancher (3), lesquels sont placés par le bas contre la tôle de plancher (3) et s'étendent depuis le support transversal de plancher avant (6) vers l'arrière jusqu'au moins à la hauteur du support transversal de siège (9), de préférence jusqu'à la tôle de talon (17) dans la région immédiate du support transversal de plancher arrière (7).

13. Structure de plancher selon l'une quelconque des revendications 1 à 12,
**caractérisée en ce que**
du côté de l'habitacle des passagers, de part et d'autre du tunnel central (8), au moins dans la région de l'angle de connexion du tunnel central (8), du support transversal de plancher avant (6) et de la tôle de plancher (3), une tôle de renforcement (18) s'étendant éventuellement jusque dans le contour extérieur du tunnel central (8) est placé sur la tôle de plancher (3).

14. Structure de plancher selon l'une quelconque des revendications 1 à 13,
**caractérisée en ce que**
au moins une tôle de renforcement de type à couple transversal (19) est disposée fixement dans l'espace chevauché par le tunnel central (8), au moins dans la région de transition du tunnel central (8) et de la tôle de talon (17).

15. Structure de plancher selon l'une quelconque des revendications 1 à 14,
**caractérisée en ce que**
les supports (1, 5, 6, 7, 10) et/ou les éléments de renforcement, respectivement les tôles de renforcement (14, 15, 16, 17, 18) et/ou les logements pour sièges (11a, 11b) se composent de tôle d'acier de haute résistance.

16. Structure de plancher selon l'une quelconque des revendications 1 à 14,
**caractérisée en ce que**
les supports (1, 5, 6, 7, 10) et/ou les éléments de renforcement, respectivement les tôles de renforcement (14, 15, 16, 17, 18) et/ou les logements pour sièges (11a, 11b) se composent de tôle d'acier éventuellement façonnée à froid ou à chaud, qui peut être fabriquée selon la technique d'ébauche sur mesure.

17. Structure de plancher selon l'une quelconque des revendications 1 à 16,
**caractérisée en ce que**
les supports (1, 5, 6, 7, 10) et/ou les éléments de renforcement, respectivement les tôles de renforcement (14, 15, 16, 17, 18) et/ou les logements pour sièges (11a, 11b) sont pourvus de moulures et/ou de nervures de renforcement.

18. Structure de plancher selon l'une quelconque des revendications 1 à 17,
**caractérisée en ce que**
un ou plusieurs des espaces creux formés par les supports (1, 5, 6, 7, 10) et/ou les éléments de renforcement, respectivement les tôles de renforcement (14, 15, 16, 17, 18) et/ou les logements pour sièges (11a, 11b) est/sont rempli(s) d'une mousse de plastique ou de métal durcissante en vue d'augmenter davantage localement la rigidité de la structure de plancher.
